# EUROPÄISCHE PATENTANMELDUNG

(11) **EP 1 172 419 A1**
(43) Veröffentlichungstag der Anmeldung: **16.01.2002**
(21) Anmeldenummer: 00115183.6
(22) Anmeldetag: 13.07.2000
(51) Int. Cl.: C09C 1/32, C09C 3/06, C08K 3/34, C08J 3/22

(54) **Eine Zusammensetzung bestehend aus einem Pigment und einem hydrophoben Zeolithen**

(71) Anmelder: Degussa AG, 40474 Düsseldorf (DE)
(72) Erfinder: Maier, Hans-Josef, 63755 Alzenau (DE); Sextl, Elfriede, Dr., 63826 Geiselbach (DE); Müller, Matthias, 63571 Gelnhausen (DE)

(57) **Zusammenfassung**

Komposition, bestehend aus mindestens einem Pigment, wie zum Beispiel Ultramarin und mindestens einem Additiv, wie einem hydrophoben Zeolith, wird in Kunststoffe eingesetzt.

## Beschreibung

Die Erfindung betrifft eine Komposition aus mindestens einem Pigment und mindestens einem Additiv.

Pigmente sind im jeweiligen Anwendungsmedium unlösliche organische oder anorganische Farbmittel. Sie unterscheiden sich daher von den sogenannten Farbstoffen, die im Anwendungsmedium löslich sind. Pigmente werden in anorganische und organische Pigmente unterteilt. Zu den anorganischen Pigmenten gehören beispielsweise Titanweiß, Bleiweiß, Ruß, Eisenoxid-, Mangan- oder Cobaltschwarz, Bleichromat, Mennige, Zinkgelb sowie Ultramarinblau. Zu den organischen Pigmenten zählt man beispielsweise Indigo, Chlorophyll und unterschiedliche Azopigmente.

Pigmente finden in einem weiten Bereich eine Anwendung, zum Beispiel als Bestandteil von Druckfarben und Tinten, zum Einfärben von Kunststoffen, Papier, Zement, Textilien, Kosmetika und Lebensmitteln. Häufig haben die Pigmente in diesen Produkten neben der Farbgebung weitere Aufgaben, wie beispielsweise der vor Rost schützende Effekt von Mennige.

Zahlreiche Pigmente können nur eingeschränkt eingesetzt werden, weil die Pigmente unter bestimmten Bedingungen Substanzen emittieren, die einen unangenehmen Geruch oder Geschmack verursachen. Diese Emission kann aus unterschiedlichen Gründen erfolgen: In einem Medium mit einem zu sauren oder zu alkalischem Milieu können Pigmente zersetzt werden, und so können unerwünschte Stoffe gebildet werden. Aber auch die mechanische Beanspruchung der Pigmentpartikel oder erhöhte Temperaturen kann zu einer Freisetzung von Geschmacks- und/oder Geruchsstoffen führen.

Dieses Phänomen kann besonders bei solchen Pigmenten beobachtet werden, die aufgrund ihrer chemischen Zusammensetzung besonders intensiv riechende Substanzen bilden können. Dazu zählen insbesondere schwefelhaltige Pigmente. Die Zersetzung der in diesen Pigmenten enthaltenen Schwefelverbindung kann zur Bildung und Freisetzung von Verbindungen führen, die einen besonders intensiven und unangenehmen Geruch und/oder Geschmack besitzen.

Ein Beispiel für ein schwefelhaltiges Pigment, das auch in großem Maßstab industriell genutzt wird, ist das Ultramarinblau. In dieser Verbindung liegen S₃--Radikalanionen vor, die auch für die intensive Blaufärbung des Ultramarins verantwortlich sind. Ultramarinblau ist gegenüber Säuren nicht stabil, sondern wird unter Bildung unangenehm riechender Substanzen durch Säuren zersetzt. Bereits Spuren von Säuren, wie sie zum Beispiel in einer Tinte oder in Kosmetika vorliegen können, können zur Freisetzung kleiner Mengen dieser übelriechenden Substanzen führen. Da der menschliche Geruchssinn gegenüber vielen Schwefelverbindungen sehr empfindlich ist, wirken bereits diese kleinen Mengen als unangenehm und störend.

Die Geruchsbelästigung ist besonders dann zu beobachten, wenn das Ultramarin mit Wasser in Kontakt steht. In diesem Fall kann das Wasser als Protonendonor fungieren und so erst die Freisetzung von beispielsweise Schwefelwasserstoff ermöglichen. Dieses kann unter anderem der Fall sein, wenn Tinten und Farben auf Wasserbasis mit Ultramarinblau als Farbmittel hergestellt werden. Ebenso wird Ultramarin zur Einfärbung von Kosmetika verwendet, die ebenfalls zu größeren Anteilen aus Wasser bestehen können.

Darüber hinaus ist es auch möglich, dass Produkte ohne Zusatz von Pigmenten unerwünschte Geruchsstoffe aus der mit Pigmenten eingefärbten Verpackung annehmen. Dieses Problem besteht beispielsweise bei Kosmetika, die bei Verpackung in mit Ultramarin gefärbten Kunststoffbehältern einen säuerlichen unangenehmen Geruch annehmen können.

Insbesondere bei Kosmetika werden diese unerwünschten Gerüche daher durch Zusatz von Parfümen überdeckt. Diese Methode hat jedoch den Nachteil, dass sie nur sehr eingeschränkt auf spezielle Produkte, wie zum Beispiel Kosmetika, anwendbar ist. Aber selbst Kosmetika enthalten nach den Erfordernissen des Marktes häufig kein Parfüm mehr, das unangenehme Gerüche überdecken kann. Bei Produkten für die Anwendung in größerem Maßstab ist der Zusatz von Parfümen dagegen wenig geeignet.

Eine weitere Möglichkeit, die Emission von Geruchs und/oder Geschmacksstoffen aus Pigmenten zu unterbinden, ist aus Patent US 4,882,225 bekannt: Die Pigmentpartikel werden in einem aufwendigen chemischen Prozeß mit einer Schicht aus Polysilikonen überzogen. Am Beispiel von Ultramarin wird gezeigt, dass die Bildung oder die Freisetzung von Geruchsstoffen wie Schwefelwasserstoff weitestgehend verhindert werden kann. Die Polymerschicht auf den Pigmentpartikeln verhindert offensichtlich die Abgabe von Schwefelwasserstoff genau so wie das Eindringen von Wasser und wäßrigen Säuren in den Ultramarinpartikel, was zu einer Zersetzung führen würde.

Diese bekannte Methode hat den Nachteil, dass die Pigmentpartikel in einem sehr aufwendigen Prozeß modifiziert werden müssen. Um einen effektiven Schutz vor der Emission von unangenehmen Geruchs- und/oder Geschmacksstoffen zu erreichen, sind beträchtliche Rohstoffmengen an Organosilanen und hohe Energiemengen nötig. Ein weiterer Nachteil besteht darin, dass zumindest zu einem kleinen Anteil die Farbintensität des Pigmentes durch die Polymerbeschichtung verloren gehen kann. Schließlich wird durch den Polymerüberzug die Charakteristik der Partikel vollständig verändert. Dadurch können andere gewünschte Eigenschaften der Pigmentpartikel neben der ursprünglichen Aufgabe der Färbung nicht mehr genutzt werden. Beispielsweise kann bei der Einarbeitung des Pigments in einen Kunststoff eine Verstärkung des Kunststoffs oder die Verbesserung des Fließverhaltens des Kunststoffs bei dessen Verarbeitung verlorengehen.

Aufgabe der Erfindung ist, eine Komposition aus mindestens einem Pigment und mindestens einem geeigneten Additiv zu entwickeln, die auf der einen Seite keine unerwünschten und unangenehmen Gerüche freisetzt, auf der anderen Seite jedoch den Farbton und die Farbbrillanz sowie andere positive Eigenschaften der enthaltenen Pigmente behält. Die Freisetzung von unerwünschten Geruchs- und/oder Geschmacksstoffen soll dabei insbesondere auch unter feuchten beziehungsweise nassen Bedingungen verhindert werden.

Weiterhin umfaßt die Erfindung Produkte, in denen eine Komposition aus mindestens einem Pigment und mindestens einem für die Geruchs- und Geschmacksadsorption geeigneten Additiv enthalten ist.

Gegenstand der Erfindung ist eine Komposition, bestehend aus mindestens einem Pigment und mindestens einem Additiv, welches dadurch gekennzeichnet ist, dass mindestens ein Additiv ein hydrophober Zeolith ist, der bei 25 °C und einer relativen Luftfeuchtigkeit von 70 % in der den Zeolithen umgebenden Atmosphäre nicht mehr als 15 Gew -% Wasser - bezogen auf die Masse des getrockneten Zeolithen - adsorbiert.

Die Erfindung zeigt, dass eine Komposition aus mindestens einem Pigment, das unter bestimmten Bedingungen geruchs- und/oder geschmacksverursachende Substanzen abgeben kann, und einem hydrophoben Zeolithen erheblich weniger dieser geruchs- und/oder geschmacksverursachende Substanzen emittiert. Insbesondere kann bei dem schwefelhaltigen Pigment Ultramarinblau auch bei Anwesenheit von Wasser sowie bei erhöhten Temperaturen eine deutliche Reduktion der unangenehmen Gerüche beobachtet werden.

Die erfindungsgemäßen Kompositionen können zu einem Teil aus einem organischen oder anorganischen Pigment oder aus mehreren dieser Pigmente zusammengesetzt sein.

Anorganische Pigmente in der erfindungsgemäßen Kompositionen können beispielsweise Ultramarinblau, Berliner Blau, Manganviolett, Cobaltviolett, Titandioxid, Nickelgelb, Titangelb, Cadmiumgelb, Zinkgelb, Ocker, Mennige, Cadmiumrot, Zinkweiß, Bleiweiß, Lithopon, schwarzes Eisenoxid, rotes Eisenoxid, braunes Eisenoxid, gelbes Eisenoxid, Chromorange, Chromvermilion, grünes Chromoxid, red lead and vermilion, Bariumsulfat, Wismuthoxy-clorid, Eisenhydroxid, Chromhydroxid und/oder Cobaldtitanat sein, wobei diese Liste nicht auf die aufgeführten Beispiele beschränkt ist.

In einer bevorzugten Ausführungsform kann als Pigment Ultramarin verwendet werden.

Organische Pigmente können beispielsweise Phthalocyanin, Quinacridon, Anilinschwarz, Naphtholgelb S, Hanzagelb 10G, Benzidingelb, Permanentgelb, Permanentorange, Benzidin-orange G, Indanthren-Brillant-Orange GK, Permanentrot 4R, Brillant Fast Scarlet, Perma-nent-rot F2R, Lake Red C, Cinquasia Red Y (Dup) (C.I. 46500), Permanent-Pink E (FH) [Quido Magenta RV 6803 (HAR)], Phthalocyaninblau, sowie organische Pigmente des Azotyps sein.

Die erfindungsgemäße Komposition kann für die Herstellung anderer Produkte, wie beispielsweise Kosmetika, Farben und Lacke, Tinten sowie gefärbte Kunststoffe, verwendet werden. Die Pigmente haben dabei im wesentlichen die Aufgabe, diese Produkte in gewünschter Art und Weise einzufärben. In vielen Fällen tragen die Pigmente aber auch dazu bei, andere Eigenschaften des Endprodukts mitzubestimmen.

Obwohl es keine grundsätzliche Einschränkung in der Teilchengröße der Pigmentpartikel gibt, können sie vorzugsweise je nach Anwendung mit einer mittleren Teilchengröße von D50 = 0,1 - 100 mm eingesetzt werden.

Die Auswahl für mögliche Additive wird dadurch sehr stark eingeschränkt, dass sie erfindungsgemäß auch in feuchten und nassen Umgebungen die geruchs- und/oder geschmacksverursachenden Substanzen in ausreichendem Maße adsorbieren müssen. Die Erfindung zeigt, dass diese Bedingung durch hydrophobe Zeolithe sehr gut erfüllt wird.

Als hydrophob können solche Zeolithe bezeichnet werden, die bei 25 °C und einer relativen Luftfeuchtigkeit von 70 % in der den Zeolithen umgebenden Atmosphäre nicht mehr als 15 Gew.-% Wasser - bezogen auf die Masse des getrockneten Zeolithen - adsorbieren. Vorzugsweise können die verwendeten Zeolithe unter diesen Bedingungen weniger als 10 Gew.-%, noch bevorzugter weniger als 5 Gew.-% Wasser - bezogen auf das Trockengewicht des Zeolithen adsorbieren.

Die verwendeten Zeolithe müssen bei der genannten niedrigen Adsorptionskapazität für Wasser dennoch eine ausreichend große Adsorptionskapazität für die geruchs- und geschmacksverursachenden Substanzen aufweisen. Dies wird dadurch erreicht, dass die Zeolithe nach ihrer Herstellung calziniert werden, und somit frei von jeglichen adsorbierten Stoffen sind.

Die verwendeten hydrophoben Zeolithe können ein SiO₂/Al₂O₃-Verhältnis von 30 bis 1000, vorzugsweise von 100 bis 300 aufweisen.

Sie können vom Strukturtyp FAU, MFI oder MOR sein. Definition und Beschreibung dieser Strukturtypen finden sich in W. M. Meier, D.H. Olson: Atlas of Zeolithe Structure, 3rd revised ed., Butterworth-Heinemann, London 1992. In einer Ausführungsform können ein oder mehrere Zeolithe dealuminierte Zeolithe sein.

Die Herstellung aluminiumarmer, hydrophober Zeolithe, die diesen Strukturtypen zuzurechnen sind, ist beschrieben in:

Typ Faujasit (FAU): J. Scherzer in T.E. Whyte, Jr., R.A. Dalla Betta, R.T.K. Baker (eds): Catalytic Materials (ACS Symposium Series 248); American Chemical Society, Washington, D.C. 1984, p. 157; US Patentschrift 5,316,993.

Typ ZSM-5 (MFI): P.A. Jacobs, J.A. Martens: Synthesis of High-Silica Aluminosilicate Zeolites (Stud. Surf. Sci. Catal. 33), Elserver, Amsterdam 1987.

Typ Mordenit (MOR):N.Y., Chen, J. Phys. Chem. 80 (1976) 60-64; M. M. Olken, J. Garces in R. von Ballmoos, J.B. Higgins, M.M.J. Treacy (eds): Proceedings from the Ninth International Zeolite Conference, Butterworth-Heinemann, Boston 1993, p. 559.

Die Zeolithe können eine Mikroporengröße von mindestens 5 A, vorzugsweise von 5 bis 8 A aufweisen . Bei kleineren Porengrößen gelangen viele Geruchs- und Geschmacksstoffe nicht oder nur schwer in den Zeolithen, so dass sie nicht effektiv adsorbiert werden können. Bei größeren Öffnungen werden die Geruchs- und Geschmacksstoffe in der Regel weniger fest gebunden, so dass die Adsorptionswirkung schwächer wird.

Die Zeolithe können mit einer mittleren Teilchengröße von D50 = 0,1 bis 20 mm, vorzugsweise von 5 bis 10 mm eingesetzt werden.

In der erfindungsgemäßen Komposition können die Mengen der Bestandteile Pigmente und hydrophobe Zeolithe in solchen Verhältnissen vorliegen, dass die Menge des Zeolithen je nach Anwendungszweck ausreichend ist, um die durch die Pigmente emittierten unerwünschten Geruchs- und Geschmacksstoffe zu adsorbieren. Will man beispielsweise eine Geruchsbelästigung bei der Trocknung des Pigments Ultramarinblau vermeiden, kann ein Verhältnis von 1 Anteil Zeolith zu 2 Anteilen Pigment, jeweils bezogen auf die Massen der Bestanteile, ausreichend sein. Bei der Einarbeitung in andere Produkte können auch kleinere Verhältnisse ausreichend sein.

Auf Grund ihres hydrophoben Charakters adsorbieren die Zeolithe nahezu kein Wasser. Daher können die Zeolithe auch in feuchten oder wäßrigen Umgebungen geruchs- oder geschmackserzeugende Substanzen in sehr niedrigen Konzentrationen adsorbieren. Dieses spielt insbesondere bei solchen Pigmenten wie beispielsweise Ultramarin eine wichtige Rolle, da die von diesen Pigmenten emittierten Schwefelverbindungen vom Menschen schon bei niedrigsten Konzentrationen als störend empfunden werden.

Zur Herstellung der erfindungsgemäßen Komposition werden calzinierte Zeolithe mit den Pigmenten in den bekannten Apparaturen sorgfältig gemischt, bis eine gleichmäßige Verteilung erreicht ist. Anschließend kann, falls für eine weitere Anwendung nötig, eine Trocknung der Komposition bei 50 - 200 °C erfolgen. Dabei kann durch Adsorption der bei Erhitzen freigesetzten Geruchsstoffe an den hydrophoben Zeolithen eine Geruchsbelästigung weitgehend verringert werden.

In der erfindungsgemäßen Komposition können neben den Pigmenten und den hydrophoben Zeolithen noch weitere Bestandteile vorhanden sein. Diese weiteren Bestandteile können beispielsweise Füllstoffe, Stabilisatoren, Antioxidantien, UV-Stabilisatoren, Konservierungsmittel, Gleitmittel sowie Weichmacher sein.

Die erfindungsgemäße Komposition hat gegenüber der Maskierung von Gerüchen und Geschmacksstoffen mit Parfümen den Vorteil, dass die Gerüche wirkungsvoll entfernt werden.

Gegenüber der in Patent US 4,882,225 beschriebenen Methode, durch Überziehen der Partikel mit einer Polymerschicht Emissionen zu verhindern, hat die erfindungsgemäße Komposition den Vorteil, dass die Herstellung der erfindungsgemäßen Komposition mit deutlich geringerem Aufwand, Rohstoff- und Energieverbrauch möglich ist.

Ein weiterer Vorteil liegt darin, dass die Pigmentpartikel ihre Farb-, chemischen und physikalischen Eigenschaften stets vollständig beibehalten.

Die Erfindung umfaßt weiterhin Produkte, in denen die erfindungsgemäße Komposition enthalten ist. Produkte dieser Art sind beispielsweise eingefärbte Kunststoffe, Farben und Lacke, Tinten oder Kosmetika.

Die Pigmente dienen in erster Linie zur Farbgebung, können in vielen Fällen jedoch auch andere Aufgaben, wie beispielsweise die Verbesserung der Konsistenz eines Produkts, übernehmen. Die hydrophoben Zeolithe haben die Aufgabe, geruchs- und/oder geschmacksverursachende Substanzen, die von den Pigmenten freigesetzt werden können, zu adsorbieren, und so ein weitgehend geruchs- und/oder geschmacksneutrales Produkt zu gewährleisten.

Untersuchungen haben beispielsweise gezeigt, dass mit Ultramarinblau eingefärbte Kunststoffe einen unangenehmen fauligen Geruch emittieren können. Dieses Phänomen konnte besonders dann beobachtet werden, wenn die Emission der geruchserzeugenden Substanzen bei erhöhten Temperaturen und bei Kontakt mit Wasserdampf untersucht wurde. Es traten aber auch unangenehme Gerüche in Kosmetika auf, die in mit Ultramarin gefärbten Kunststoffbehältern verpackt waren. Bei entsprechenden Vergleichsversuchen mit den gleichen Kunststoffen ohne Zusatz von Ultramarin rochen die Kunststoffe wesentlich weniger unangenehm, so dass der unangenehm faulige Geruch durch die Zugabe des Ultramarins verursacht worden sein muß.

Ein weiterer Gegenstand der Erfindung sind Kunststoffe, einschließlich Masterbatche und Kunststoffartikel, dadurch gekennzeichnet, dass sie mindestens ein Pigment und mindestens einen hydrophoben Zeolithen enthalten, und der hydrophobe Zeolith bei 25 °C und einer relativen Luftfeuchtigkeit von 0,7 in der den Zeolithen umgebenden Atmosphäre nicht mehr als 15 Gew -% Wasser - bezogen auf die Masse des getrockneten Zeolithen - adsorbiert.

Erfindungsgemäße Kunststoffe, denen eine erfindungsgemäße Komposition aus Pigmenten und hydrophoben Zeolithen zugesetzt wird, emittieren deutlich weniger Geruchs- und Geschmacksstoffe, die durch Bildung aus oder durch Abgabe von den Pigmenten freigesetzt werden können. Die Farbwirkung der Pigmente wird in diesen Kunststoffen bei Zugabe von hydrophoben Zeolithen nicht verändert, sodass die Pigment-Eigenschaften wie beispielsweise die Farbbrillanz erhalten bleiben.

Die erfindungsgemäßen Kunststoffe können Pigmente zu einem Anteil von 0,01 - 60 Gew.-%, bezogen auf die Masse des eingesetzten Polymermaterials enthalten. Der Zeolithanteil kann bei 0,01 - 40 Gew.-%, vorzugsweise bei 0,01 - 5 Gew.-%, bezogen auf die Masse des eingesetzten Polymermaterials liegen. Diese relativ großen Spannen des Pigmentanteils im Kunststoff ergibt sich aus den unterschiedlichen Intensitäten der Einfärbung.

Die erfindungsgemässen Kunststoffe können ein oder mehrere Pigmente und ein oder mehrere unterschiedliche hydrophobe Zeolithe enthalten.

In einer bevorzugten Ausführungsform kann als ein Pigment Ultramarinblau eingesetzt werden. Als einen Zeolith können die Kunststoffe bevorzugt einen Zeolith vom Strukturtyp FAU, MFI oder MOR enthalten. Mindestens ein Zeolith kann ein SiO₂/Al₂O₃ Verhältnis von 30 bis 1000 aufweisen.

Der geringe Zeolithanteil ist ausreichend, um durch die Pigmente verursachte Geruchs- oder Geschmacksbeeinträchtigung deutlich zu reduzieren ohne die Eigenschaften des Kunststoffs nachteilig zu verändern. Die Emission der geruchs- und/oder geschmacksverursachenden Substanzen aus dem Kunststoff wird insbesondere in feuchten oder nassen Umgebungen effektiv verringert. Auf diese Art und Weise kann beispielsweise die Bildung von unangenehmen Gerüchen in Kosmetika verhindert werden, die in mit Ultramarinblau gefärbten Kunststoffbehältern verpackt sind.

Um die Eigenschaften des Kunststoffs, beispielsweise die Elastizität oder die Festigkeit nicht negativ zu beeinflussen, sollte die mittlere Teilchengröße der in der Zubereitung enthaltenen Bestandteile kleiner als 15 mm, vorteilhafterweise zwischen 0,5 und 12 mm sein.

Als Polymergrundstoff können alle üblichen Polymermaterialien verwendet werden, beispielsweise Polyethylen, HDPE, Polypropylen, Ethylen-Propylen, Polybuten, Polybutadien, Polyvinylchlorid, Polymethacrylate, Polyacrylate, Polyacrylonitrile, Polyethylenterephthalat, Polystyrol, Acrylnitrilbutadienstyrol, Polyester, Polyamide oder Kautschuk oder Mischungen daraus.

In den Kunststoffen können darüber hinaus auch Zusätze wie Füllstoffe, Stabilisatoren, Antioxidanzien, UV-Stabilisatoren, Konservierungsmittel, Gleitmittel sowie Weichmacher enthalten sein.

Füllstoffe können beispielsweise Calziumcarbonat, Talkum, Kaolin, Diatomit, Calziumsulfit, Magnesiumcarbonat, Bariumcarbonat, Magnesiumsulfit, Bariumsulfit, Aluminiumhydroxid, Magnesiumhydroxid, Calciumoxid, Magnesiumoxid, Zinkoxid, Titanoxid, Tone, Calziumsilikate, Hydrotalzite, Siliziumdioxid, Kieselgel, Aluminiumoxid, hydrophile und hydrophobe Zeolite, Cristobalit, Turmalin, Kaolin oder kolloidaler Schwefel sein. Da die Pigmente im Gegensatz zu den im Patent US 4,882,225 beschriebenen, mit einer Polymerschicht überzogenen Pigmentpartikel ihre chemischen und physikalischen Eigenschaften behalten, färben sie den erfindungsgemäßen Kunststoff nicht nur, sondern können auch als Füllstoff wirken. Dadurch kann auf den Zusatz anderer Füllstoffe ganz oder teilweise verzichtet werden.

Stabilisatoren können zugesetzt werden, um die vorzeitige Alterung des Kunststoffs zu verhindern. Stabilisatoren dieser Art sind beispielsweise Phenyl-b-naphthylamin, Diphenylamine wie N,N'-Diphenylethylendiamin, p-Phenylendiamine wie N,N'-Diphenyl-p-phenylendiamine, Hydrochinonderivate wie 6-Ethoxy-2,2,4-trimethyl-1,2-dihydrochinolin, Monophenole wie 2,6-Di-tert-butyl-4-methylphenol, Polyphenole wie 2,2'-Methylen-bis (4-ethyl-6-t-butylphenol, Thiobisphenole 4,4'-Thiobis-(6-t-butyl-3-methylphenol), 2-Mercapto-benzoimidazole usw. Ihr typischer Anteil am Kunststoff beträgt zwischen 0,01 und 10 Gew.-% bezogen auf die Masse des eingesetzten Polymermaterials.

Als Weichmacher können unter anderem Phthalsäureester wie Dibutylphthalat, Diheptylphthalat, Dioctylphthalat, Diisodecylphthalat, Butyllaurylphthalat, Ditridecylphthalat, Butylbenzyl-phthalat oder Butylphthalylbutylglycolate, Phosphorsäureester wie Tricresylphosphate oder Trioctylphosphate, Fettsäureester wie Tri-n-butylcitrate, Dioctyladipate, Dioctylazelat, Dioctylsebacat oder Methylacetylricinoleat, Expoxide wie Alkylepoxystearate, 4,5 - Epoxytetrahydrodiisodecylphthalate, oder chlorierte Paraffine verwendet werden. Abhängig von der späteren Verwendung können die Anteile der Weichmacher bei 0,01 - 10 Gew.-%, bevorzugt bei 0,1 - 5 Gew.-% bezogen auf die Masse des eingesetzten Polymermaterials, liegen.

Zur Herstellung der Kunststoffe wird die erfindungsgemäße Komposition aus mindestens einem Pigment sowie mindestens einem hydrophoben Zeolith und gegebenenfalls weiteren Additiven mittels an sich bekannten Methoden in das geschmolzene Polymermaterial eingearbeitet. Die Komposition kann in Form eines Masterbatches oder als Trockenpulver (dry-blend) zu dem Polymer zugegeben werden. Gibt man die Zubereitung als dry-blend zum Polymermaterial, ist darauf zu achten, dass die Zubereitung möglichst wasserfrei ist. Anderenfalls kann Wasser verdampfen, was zu einer Blasenbildung im Kunststoff führt. Bei der Einarbeitung ist weiterhin darauf zu achten, dass die einzelnen Bestandteile der Zubereitung gleichmäßig in dem Polymer verteilt werden.

Die erfindungsgemäßen Kunststoffe können als Masterbatche oder unverarbeitet vorliegen oder gegebenenfalls gleich weiterverarbeitet werden. Aus den Kunststoffen können Spritzgußartikel, Fasern, Stoffe, Folien oder andere Formteile hergestellt werden, die wiederum beispielsweise als Verpackungsmaterial verwendet werden können. Diese Aufzählung beschreibt nur Beispiele für eine Anwendung der erfindungsgemäßen Kunststoffe und schränkt das Feld von möglichen Anwendungsgebieten nicht ein.

Die erfindungsgemäßen Kunststoffe haben den Vorteil, dass sie durch den Zusatz von hydrophoben Zeolithen auch in feuchten beziehungsweise nassen Umgebungen deutlich weniger Geruchs und/oder Geschmacksstoffe emittieren.

Der Zusatz von Füllstoffen zu den Kunststoffen kann vermindert werden, weil die zugesetzten Pigmente der Komposition auch als Füllstoff in den Kunststoffen wirken können. Daher können die zugesetzten Pigmente der Komposition auch zur Stabilität des erfindungsgemäßen Kunststoffes beitragen.

Die Farbe des Kunststoffs wird nicht beeinträchtigt.

### Beispiele

Zur Bestimmung, wie stark die erfindungsgemäßen Kunststoffe im Vergleich zu Kunststoffen ohne Zeolithzusatz flüchtige organische Verbindungen emittieren, werden Geruchstests nach der VDA-Empfehlung 270 "Bestimmung des Geruchsverhaltens von Werkstoffen der Kraftfahrzeug-Innenausstattung", Variante C 1 bis 3 durchgeführt. Diese Vorschrift berücksichtigt das Werkstoffverhalten unter verschiedenen Temperatur- und Klimaeinwirkungen.

### Durchführung:

### Variante C 1:

In einem 1 l großen, luftdicht abgeschlossenen Glas werden 50 ml deionisiertes Wasser und 50 ml (± 5 ml) des Kunststoffs (als Folie oder Granulat) bei 23 °C (± 2 °C) für 24 (± 1h) so gelagert, dass der Kunststoff und das Wasser nicht in direktem Kontakt stehen. Das Wasser sorgt dafür, dass eine hohe Luftfeuchtigkeit in dem Gefäß vorhanden ist.

Nach 24 h beurteilen vier erfahrene Tester den Geruch der Luft nach folgender Bewertungsskala:
- Note 1:: nicht wahrnehmbar
- Note 2:: wahrnehmbar, nicht störend
- Note 3:: deutlich wahrnehmbar, aber noch nicht störend
- Note 4:: störend
- Note 5:: stark störend
- Note 6:: unerträglich

### Variante C 2:

In einem 1 l großen, luftdicht abgeschlossenen Glas werden 50 ml deionisiertes Wasser und 50 ml (± 5 ml) des Kunststoffs (als Folie oder Granulat) bei 40 °C (± 2 °C) für 24 h (± 1h) so gelagert, dass der Kunststoff und das Wasser nicht in direktem Kontakt stehen.

Nach 24 h beurteilen vier erfahrene Tester den Geruch der Luft nach der Bewertungsskala aus Variante C 1.

### Variante C 3:

In einem 1 l großen, luftdicht abgeschlossenen Glas werden 50 ml (± 5 ml) des Kunststoffs (als Folie oder Granulat) - ohne Zugabe von Wasser - bei 80 °C (± 2 °C) für 2 h (± 10 min) gelagert.

Vier erfahrene Tester beurteilen den Geruch der Luft nach der Bewertungsskala aus Variante C 1.

Das Bewertungsergebnis wird unter Hinweis auf das Prüfverfahren ("Geruchstest VDA 270") und der angewendeten Variante (C 1, C 2 oder C 3) als das arithmetische Mittel der Einzelbenotungen angegeben, wobei beim Runden des Mittelwerts in halben Notenschritten abgestuft wird.

### Beispiel 1

Geruchstest mit Ultramarin und mit einem Gemisch aus Ultramarin und Flavith

### Beispiel 2

Herstellung eines Vergleichsmasterbatches mit Ultramarin aber ohne Flavith

### Beispiel 3

Zur Herstellung eines Masterbatches werden 141 g Polyethylen Lupolen 1800 S auf einer Walze bei 10 Umdrehungen pro Minute, einer Friktion von 1/1,4, einem Walzenspalt von 50 mm und einer Temperatur von 120°C aufgeschmolzen. Nach zwei Minuten Aufschmelzdauer werden 150 g Ultramarinblau und 9 g des von der Degussa-Hüls AG, Deutschland vertriebenen hydrophoben Zeoliths Flavith D 206 zugegeben und sechs weitere Minuten in den Polymer eingewalzt. Der Kunststoff wird von der Walze entfernt und auf der Hackmühle zerkleinert. : **Geruchstest VDA 270 C 1 - Note 2,0**

### Beispiel 3

Herstellung eines Masterbatch mit Ultramarin und ca. 3 % Flavith S 108 in PP und/oder PE

### Beispiel 4

Herstellung eines Masterbatch mit Ultramarin und 20 % Flavith S 108 in PP und/oder PE

## Patentansprüche

1. Komposition, bestehend aus mindestens einem Pigment und mindestens einem Additiv, **dadurch gekennzeichnet, dass** mindestens ein Additiv ein hydrophober Zeolith ist, der bei 25 °C und einer relativen Luftfeuchtigkeit von 70 % in der den Zeolithen umgebenden Atmosphäre nicht mehr als 15 Gew.-% Wasser - bezogen auf die Masse des getrockneten Zeolithen - adsorbiert.

2. Komposition nach Anspruch 1, **dadurch gekennzeichnet, dass** eines der Pigmente Ultramarinblau ist.

3. Komposition nach Anspruch 1 und 2, **dadurch gekennzeichnet, dass** mindestens ein Zeolith ein Zeolith vom Strukturtyp FAU, MFI oder MOR ist.

4. Komposition nach Anspruch 1 bis 3, **dadurch gekennzeichnet, dass** mindestens ein Zeolith ein molares SiO₂/Al₂O₃-Verhältnis von 30 bis 1000 aufweist.

5. Kunststoffe, einschließlich Masterbatche und Kunststoffartikel, **dadurch gekennzeichnet, dass** sie mindestens ein Pigment und mindestens einen hydrophoben Zeolithen enthalten, und der hydrophobe Zeolith bei 25 °C und einer relativen Luftfeuchtigkeit von 0,7 in der den Zeolithen umgebenden Atmosphäre nicht mehr als 15 Gew.-% Wasser - bezogen auf die Masse des getrockneten Zeolithen - adsorbiert.

6. Kunststoffe einschließlich Masterbatche und Kunststoffartikel nach Anspruch 5, **dadurch gekennzeichnet, dass** eines der Pigmente Ultramarinblau ist.

7. Kunststoffe einschließlich Masterbatche und Kunststoffartikel nach Anspruch 5, **dadurch gekennzeichnet, dass** mindestens ein Zeolith ein Zeolith vom Strukturtyp FAU, MFI oder MOR ist.

8. Kunststoffe einschließlich Masterbatche und Kunststoffartikel nach Anspruch 5, **dadurch gekennzeichnet, dass** mindestens ein Zeolith ein molares SiO₂/Al₂O₃-Verhältnis von 30 bis 1000 aufweist.

9. Kunststoffe einschließlich Masterbatche und Kunststoffartikel nach Anspruch 5, **dadurch gekennzeichnet, dass** der verwendete Polymergrundstoff Polyethylen, HDPE, Polypropylen, Ethylen-Propylen, Polybuten, Polybutadien, Polyvinylchlorid, Polymethacrylate, Polyacrylate, Polyacrylonitrile, Polyethylenterephthalat, Polystyrol, Acrylnitrilbutadienstyrol, Polyester, Polyamide oder Kautschuk oder Mischungen daraus ist.

10. Kunststoffe einschließlich Masterbatche und Kunststoffartikel nach Anspruch 5, **dadurch gekennzeichnet, dass** sie Pigmente zu einem Anteil von 0,01 - 60 Gew.-%, bezogen auf die Masse des eingesetzten Polymermaterials, und Zeolithe zu einem Anteil von 0,01 - 40 Gew.-%, vorzugsweise von 0,01 - 5 Gew.-%, bezogen auf die Masse des eingesetzten Polymermaterials, enthalten.
